# EUROPEAN PATENT APPLICATION

(11) **EP 2 372 210 A2**
(43) Date of publication of application: **05.10.2011**
(21) Application number: 11155123.0
(22) Date of filing: 21.02.2011
(51) Int. Cl.: F16L 17/04, F16L 23/02, F16L 23/08, F16L 23/18, F16L 21/06

(54) **Coupling element**

(30) Priority: 29.03.2010 CL 2832010
(71) Applicant: Vimar Sociedad Comercial Limitada, Puerto Montt (CL)
(72) Inventor: Vidal Vivallo, Víctor Ramón, Castro (CL); Martínez Acevedo, Sergio Javíer, Puerto Montt (CL)
(74) Representative: Grünecker, Kinkeldey, Stockmair & Schwanhäusser Anwaltssozietät

(57) **Abstract**

A coupling element (1) that allows forming an easy-to-install coupling with precise and perfect fit between pipes, consisting of a body and a cavity in said body for a pipe to be housed, wherein said semi-tubular body (2) has a first flange (3) in its first lower edge and a second flange (4) in its second lower edge; wherein a first plurality of holes (5) is located in the first flange (3) and a second plurality of second holes (6) is located in the second flange (4); wherein the upper edge of the front face (16) of said body (2) has a semicircular flange (7) where a plurality of front holes (8) is located; where in said front face (16) of said body (2) includes a semicircular groove (9) concentrically located with respect to the semicircular cavity (17) of the coupling element (1) for an O-ring to be housed; where in the lower edge of said front face (16) includes a lower perimeter rim or projection (10) provided with a notch (12); and where in the lower face of the body (2), in said semicircular cavity (17) includes a plurality of ribs (11) designed to sink or indent into the outer surface of the pipe (14) so as to ensure sealing. The present invention also refers to the method of assembly of the coupling elements (1).

## Description

### TECHNICAL FIELD OF THE INVENTION

This invention relates to a coupling formed by four equal parts, each of them in the form of a semi-cylinder having the same external dimensions as the pipe, and edges with holes that must be aligned so as the bolts, nuts and washers can be tightened. The internal portion of the semi-cylinder has at least two cross-section ribs in relief to be sunk as teeth into the pipe at the moment this is being tightened. The main face of the parts of the coupling facing each other to align holes so as to connect the pipes has a flange with a projecting notch for a straight and smooth cut of each pipe to be joined and a groove to place the rubber O-ring. The four parts of the invention are made of polyamide plastic that expand as the moisture increases, thus achieving a better tightening against the pipes as well as a total sealing.

### BACKGROUND OF THE INVENTION

Pipes joined by means of existing couplings are mainly used for conveying fluids and gases. Due to this fact the main purpose of couplings is to achieve total sealing of the pipes to be joined, considering that their function is to prevent fluids or gases from leaking; regardless of whether pipes have a precise and perfect fit with respect to each other. In some couplings, both pipes ends to be joined must be inserted inside the coupling which resembles a tube (such as electrofusion couplings, Plasson, Gegorg Fischer, Straub Open Flex and Aqualok Superfit) while others require the presence of a rubber tube or packing in both pipes (e.g Victaulic, Straub Open Flex couplings) before installing the parts of the coupling, therefore it is not possible to observe the fit or separation between both pipes. In other cases, the design or cutting specification and installation require or allow pipes to be separated (e.g. Plasson coupling, electrofusion, Victaulic, etc.).

However, for the purpose of conveying solid elements through an air or liquid flow at high speed, singularities (connectors, valves or any other element installed in the pipe) or separations should not be present throughout the whole interior of the pipe nor in the joints, in order to avoid causing deterioration (dust production and cracked elements) to the product being conveyed. Singularities or separations in pipes contribute to the accumulation of product material, thus affecting the durability of the coupling as well as of the pipe in addition to the fact of causing loss of the solid element being conveyed.

There is a wide variety of couplings in which a skilled technical staff and special equipment are required in order to make the joints (as in the case of the electrofusion coupling). Said special machines (equipment) are used to fuse together the plastic HDPE and the coupling of the state of the art.

For all the couplings in which both pipe ends must be inserted inside the coupling or into cylindrical parts, both pipes must be perfectly circular, although this does not normally occur in the case of HDPE pipes. These couplings have a very precise fit against pipes which makes difficult the installation of the couplings of the state of the art. Due to this fact, a previous work must be performed in order to achieve the circularity of the pipes so as to make easier the insertion of the latter into the coupling.

In all the currently available couplings, additional previous work must be done, since it is necessary to cut the pipes in order to achieve the original circular shape of the pipe before the installation. In order to obtain the final distance between each pipe end inside the couplings, it is necessary to measure and mark the cut ends of the pipes according to the predefined tables provided by the coupling's supplier. Subsequently these marks are used to measure and calculate the final distance at which both pipe ends were separated from each other inside the coupling (as in the case of electrofusion coupling, Victaulic and others).

Several state of the art couplings are known to join pipes, such as the coupling disclosed in document WO 2008/144332 (Dole et al.) dated November 17, 2008. This document describes a two-body coupling with two bolts on each side, which allows to secure the coupling to the pipe. The bolts connect each upper and lower section to a small element which serves to couple and make the joining of these two elements rigid. This system also includes an element made of a flexible material which remains in contact with the pipe ends, providing a certain space between both faces thereof.

Document US 7,144,047 (Dole) dated June 16, 2006 discloses a mechanical coupling for pipes that allows axial, torsion and angular deviations between the pipes joined by the coupling. This coupling is provided with rings wherein each ring has an outside diameter greater than the pipe, said rings are coupled to each pipe end to be joined. Each ring has a circumferential groove for receiving an O-ring. A band is concentrically placed around the rings. This band has an inner surface facing the O-ring tightly. A casing is located around the rings and the band. Said casing is provided with edges that extend radially with respect to the space of pipes, so that they may deviate and keep a radial distance between the casing and the band. This allows the band to be securely fixed over the O-rings and keep a tight sealing.

Document US 7,341,288 (Lundstrom) dated June 30, 2005, discloses a coupling comprising a cylinder at which ends, two rings are located. The coupling is designed to have enough axial restriction, which is achieved by means of four sets of (long) bolts and nuts that tighten the assembly and prevent the rings from moving. Also, fastening to the tube is achieved with the four bolts inserted at specific points of each ring. Each one of these bolts is placed against the pipe until it is secured.

Document US 7,384,076 (Bradley) dated April 27, 2006 discloses a coupling for fluids that are conveyed through high-pressure pipes. This coupling comprises two rings axially connecting each other by means of a set of four bolts. The rings are also radially secured with bolts. Also a small tube is provided over the pipe joint that prevents the joint from moving. The rings are completely fixed to the pipe by means of internal (rubber) grooves that are secured to the pipe by the force produced by the assembly.

Document US 7,490,866 (Webb et al) dated May 19, 2005, describes a device to axially anchorage of a coupling, comprising a system of bolts located on both sides of the coupling and a structure to fasten the pipe to the coupling, which consists of a toothed ring and inner grooves.

Document US 6,672,631 (Weinhold) dated January 06, 2004, discloses a coupling secured to the pipe by means of two bolts. This coupling has two parts, each one assembled to each pipe end so as to be joined and they are secured to each other with bolts and shackle-type rigid structure (bow strip). A clamp-type element is provided on top of the coupling which puts pressure over the assembly thus allowing the joint to be tightly secured.

The documents above described disclose different types of couplings, however none of them allows quick joining or connection of the pipes. The present invention generates perfectly circular profiles by means of a straight and smooth cut produced by the method of assembly, which achieves a precise and perfect fit between the pipes ends to be joined, without the presence of separations or singularities (connectors, valves or any other element installed in the pipe). The assembly and disassembly is easy, only using conventional hand tools such as saw and combination wrenches (open and box ends).

### SUMMARY OF THE INVENTION

The present invention refers to a joint assembly for pipe ends comprised by two couplings, wherein a first coupling is located at one end of a first pipe and a second coupling is located at one end of a second pipe. Each coupling has means to secure the appropriate sealing between the inner portion thereof and the outer surface of the pipe. In addition, both couplings have sealing elements, which allow secure joining and coupling their faces, thus generating a watertight seal that prevents the fluid conveyed by the pipes from leaking.

More specifically this invention refers to a coupling comprising four equal parts, and each one of them is shaped in the form of a semi-cylinder having the same outer dimensions as the pipe, as well as edges and holes that must be aligned for bolts, nuts and washers to be tightened. The internal part of the semi-circumference has at least two cross-section ribs in relief that sink as teeth into the pipe when tightened. The main face of the coupling parts facing each other to align the holes so as to connect the pipes is provided with flange having a projecting notch to receive the straight and smooth cut of each pipe to be joined and a groove where the rubber O-ring is placed. The four parts of the invention are made of polyamide plastic that expands as the moisture increases, thus achieving a better tightening against pipes and consequently a total sealing.

For the installation, two parts of the invention must be placed over the pipe end, which can be circular or oval, aligning the holes and tightening by means of the bolts and nuts until edges are fully joined. The pipe takes the inner shape of the two parts of the coupling, which become perfectly circular and tightly secured to the inner ribs in relief. The pipe end protruding from the main face is cut using the projecting rib as a cutting guide. The same operation is performed with the other two parts in the other pipe. The main faces of both parts installed in the pipes are joined by placing the rubber O-ring and aligning the holes so as to tight the bolts with the nuts and washers at the projecting edge.

### BRIEF DESCRIPTION OF FIGURES

The figures attached which are included in order to provide a better understanding of the invention, are herein incorporated and are part of this description. The figures illustrate the preferred embodiments and along with the description are useful to explain the principles of this invention.
Figure 1 shows a top front perspective view of the coupling element of this invention.
Figure 2 shows a lower front perspective view of the coupling element of this invention.
Figure 3 shows a top perspective view of the coupling element of this invention.
Figure 4 shows a lower perspective view of the coupling element of this invention.
Figure 5 shows an enlarged detail of a first embodiment of the indentation rib of the coupling element of the present invention.
Figure 6 shows an enlarged detail of a second embodiment of the indentation rib of the coupling element of the present invention.
Figure 7 shows an enlarged detail of a third embodiment of the indentation rib of the coupling element of the present invention.
Figure 8 shows an enlarged detail of a first embodiment of the flange of the coupling element of the present invention.
Figure 9 shows an enlarged detail of a second embodiment of the flange of the coupling element of the present invention.
Figure 10 shows an enlarged view of the semicircular groove where the O-ring is housed of the coupling element of the present invention.
Figure 11 shows a front top perspective view with the flange and the semicircular groove where the O-ring is housed of the coupling element of the present invention.
Figure 12 shows a front view of the coupling element of this invention.
Figure 13 shows a rear view of the coupling element of this invention.
Figure 14 shows a side view of the coupling element of this invention.
Figure 15 shows a perspective view of a coupling assembly, made up with the coupling element of the present invention.
Figure 16 shows a perspective view of a joint assembly of one pair of couplings, made up with the coupling element of the present invention.
Figure 17 shows a perspective, exploded view of two coupling elements of the present invention.
Figure 18 shows a perspective view of two coupling elements of the present invention mounted on a pipe.
Figure 19 shows a plan view of two coupling elements of the present invention mounted on a pipe.
Figure 20 shows a perspective view of two coupling elements of the present invention mounted on a pipe where the front rim of the pipe has been cut to be joined to another pipe.
Figure 21 shows a perspective view of two pipes connected by four coupling elements of the present invention.

### DESCRIPTION OF THE INVENTION

The present invention provides a joint which can be easily and quickly installed or uninstalled by means of simple and conventional tools that succeed in joining two pipes with a precise and perfect fit in both ends thereof, without requiring a specialized staff or special equipment to that end. HDPE pipes take the semi-circumference shape of the parts of the invention when parts are tightened against the pipes, thus achieving a precise and perfect fit between both ends to be joined. Thus, the coupling between the pipe ends to be joined is similar to only one piece inside, as no singularities or separations are present between the pipes. By using bolts, nuts, washers, the rubber O-ring and the polyamide plastic material of the coupling, total sealing is achieved between the pipes as well as to the outside of them.

A joint assembly for pipes ends is normally comprised by two couplings: a first coupling is located at one end of a first pipe and a second coupling is located at one end of a second pipe. Each coupling has means to secure the proper sealing between the internal portion of its body and the outer surface of the pipe. Also, both couplings are provided with sealing elements that ensure a tight fit of their faces with the coupling, thus generating a watertight seal that prevents the fluid conveyed by the pipes from leaking.

The basic element of the invention comprises one piece of polyamide plastic which is equivalent to one half of a coupling or, in other words, to a quarter of the joint assembly comprised by two couplings.

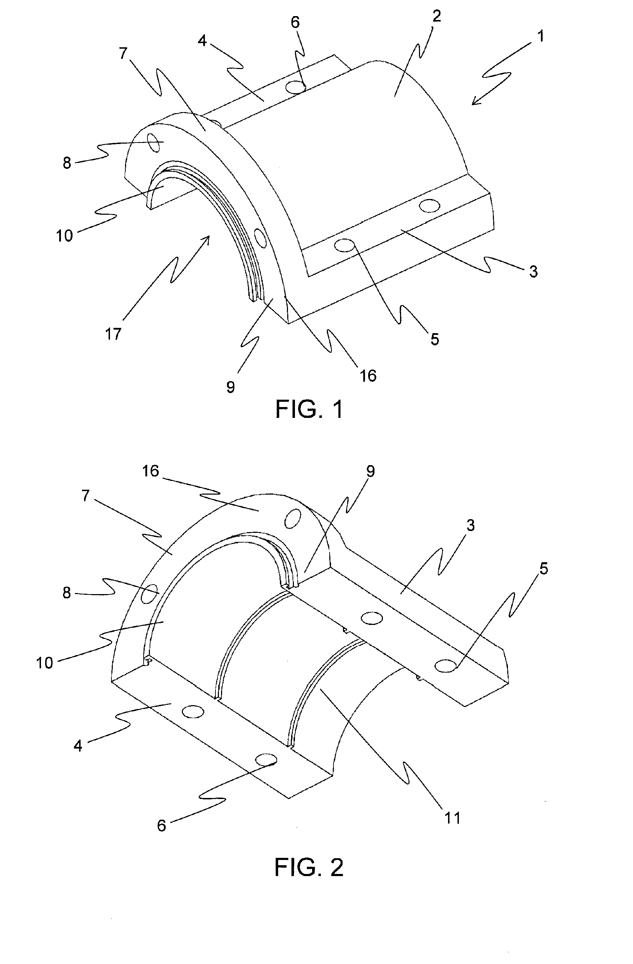

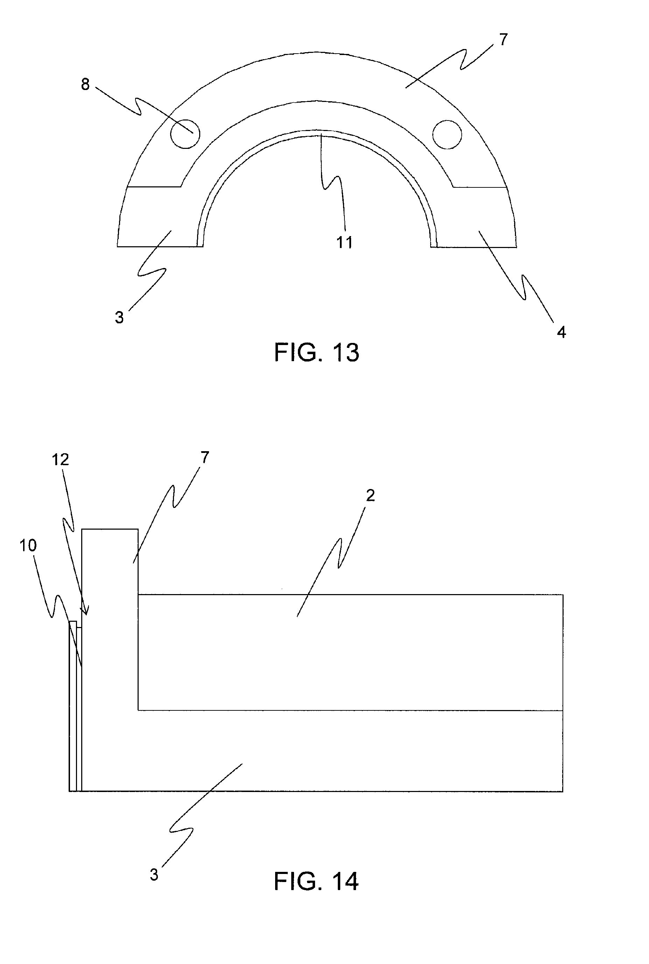

In reference to figures 1 to 4, and 11 to 14, the coupling element (1) of this invention is comprised by a semi-tubular body (2) that has a first flange (3) in its first lower edge and a second flange (4) in its second lower edge. The first flange (3) has a first plurality of holes (5) and the second flange (4) has a second plurality of second holes (6).

The upper edge of the front face (16) in the body (2) of the coupling element (1) has a semicircular flange (7) where a plurality of front holes (8) is located. The front face (16) of the body (2) has a semicircular groove (9) concentrically located to the semicircular cavity (17) of the coupling element (1). The lower edge of the front face (16) has a lower perimeter rim or projection (10) provided with a notch (12).

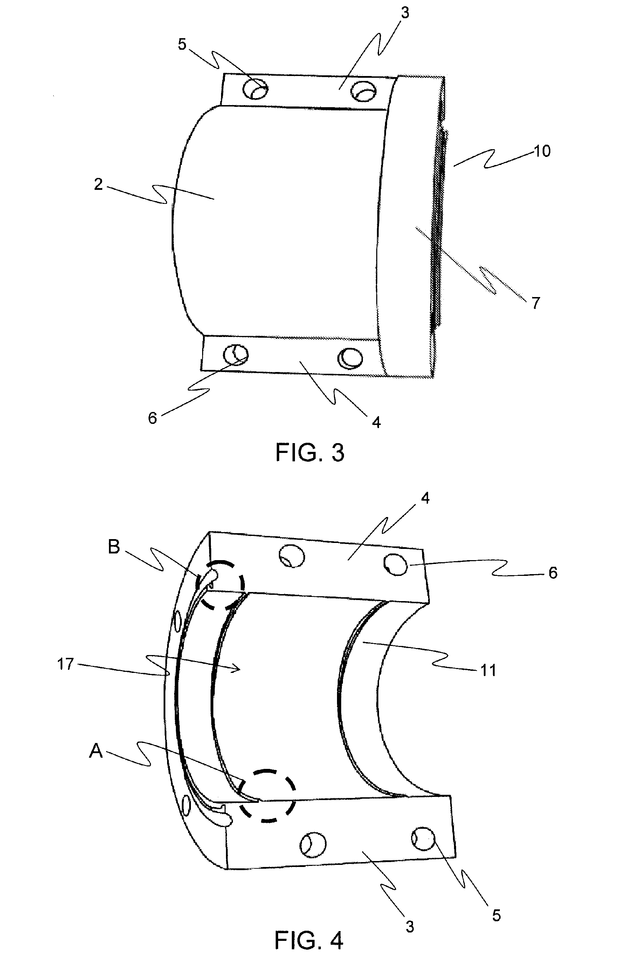

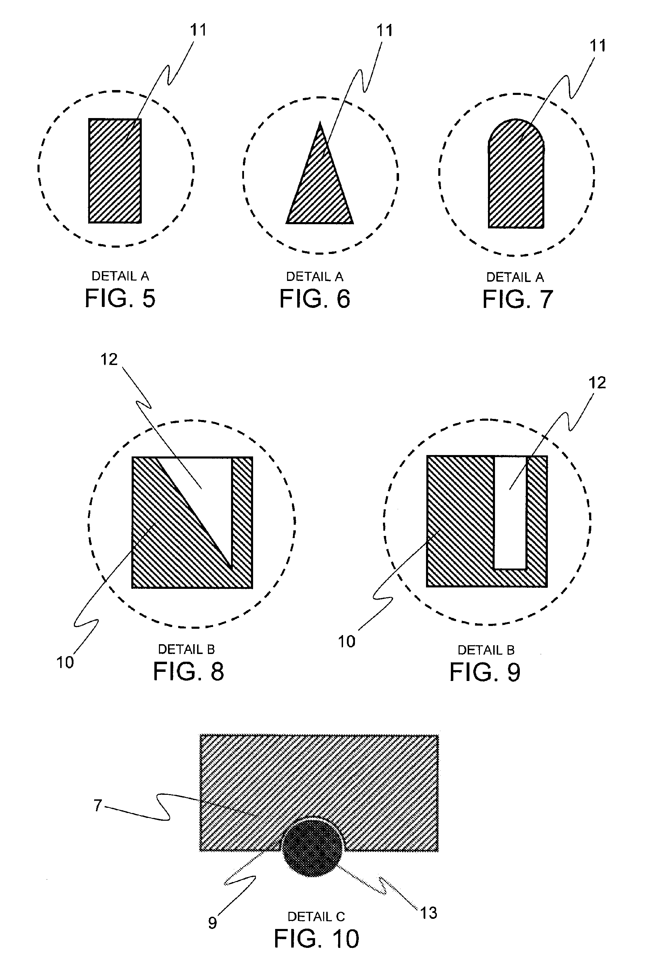

The lower face of the body (2) in the semicircular cavity (17) has a plurality or ribs (11). These ribs are designed to sink or indent into the outer surface of the pipe (14), which will allow fastening the sealing between the coupling element (1) and said pipe (14). As shown by Figures 5 to 7 illustrating the Detail A shown in Figure 4, the ribs (11) can have a rectangular, triangular section or a rectangular projection with an outer edge having a curved convex shape. In a preferred embodiment, the rib (11) has a triangular section where - due to the effect of the outer sharp tooth-shaped edge - the penetration into the outer surface of the pipe (14) will be made in an easier way, thus ensuring the proper sealing.

Likewise, as shown in Figures 8 and 9 illustrating the Detail B shown in Figure 4, the lower perimeter rim or projection (10) has a notch (12) that may have a triangular or rectangular section, which is used as a guide for cutting the front portion of the pipe (14) during the assembly operation.

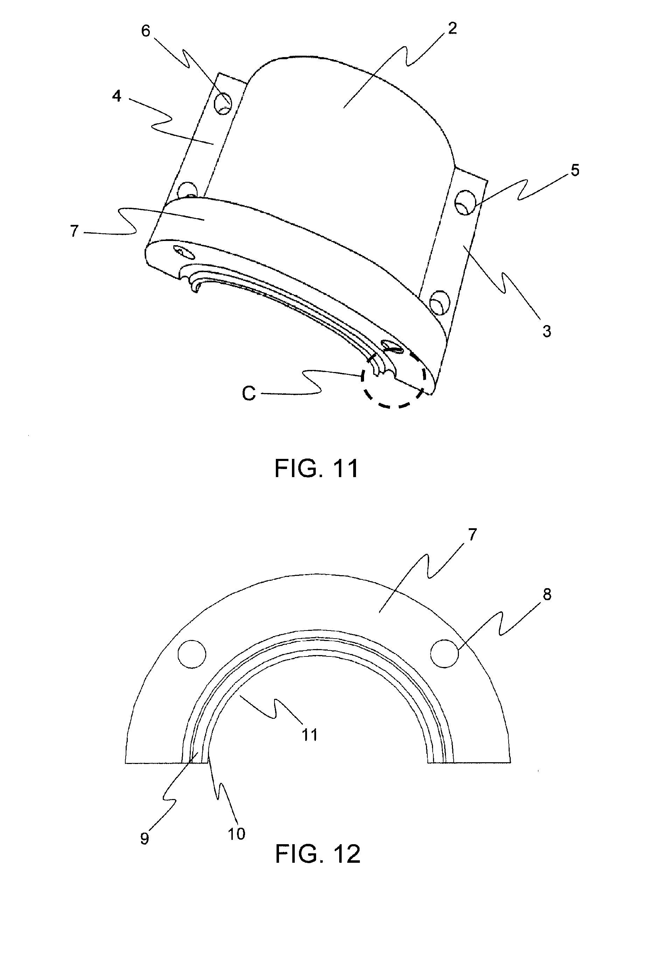

Figure 10 shows the enlarged detail illustrated by Figure 11. Detail C depicts a cross-section cut in the front face (16) of the coupling body (2) where the semicircular groove (9) concentrically located with respect to the cavity (17) is designed to house an O-ring (13), which allows fastening the seal between both couplings during assembly operation.

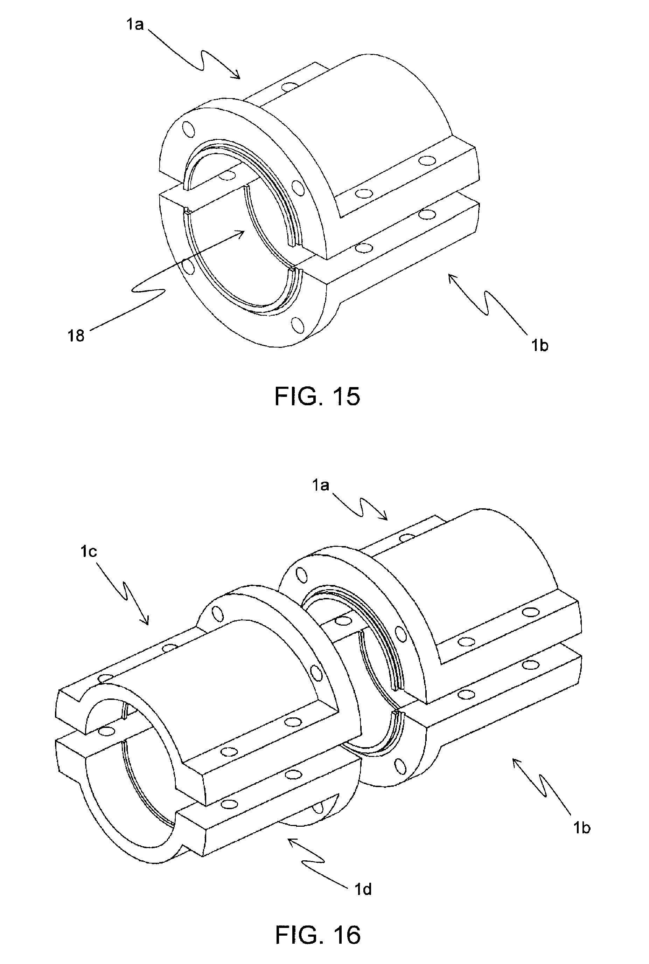

Figures 15 to 21 show the assembly operation. In order to form the full coupling assembly it is necessary to join two coupling elements (1) of the present invention, i.e. a first coupling element (1 a) with an inverted homologous second coupling element (1b). The semicircular cavities (17) of each coupling element (1a, 1b) create a circular cavity (18) to house the pipe (14).

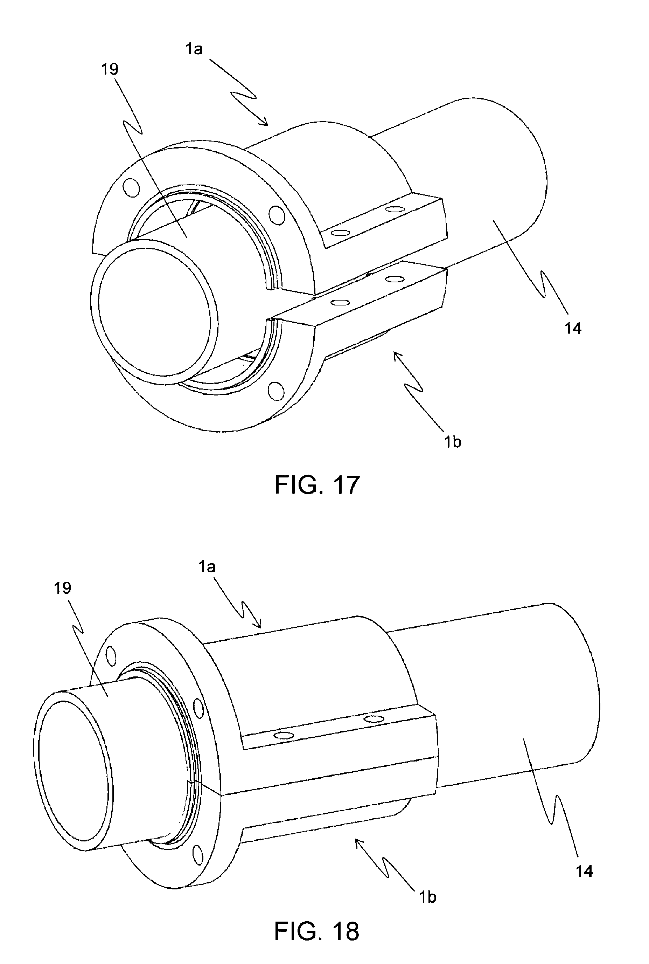

As shown in Figures 17 and 18, the pipe (14) is placed in the cavity (18) created by the first coupling element (1a) and the second inverted homologous coupling element (1b). Then, joining means (not shown) such as bolts and nuts are placed in the first plurality of holes (5) of the coupling elements (1a, 1b), and joining means (not shown) such as bolts and nuts are placed in the second plurality of holes (6) of the coupling elements (1 a, 1 b), in order to ensure that the plurality of ribs (11) indent into the outer surface of the pipe (14).

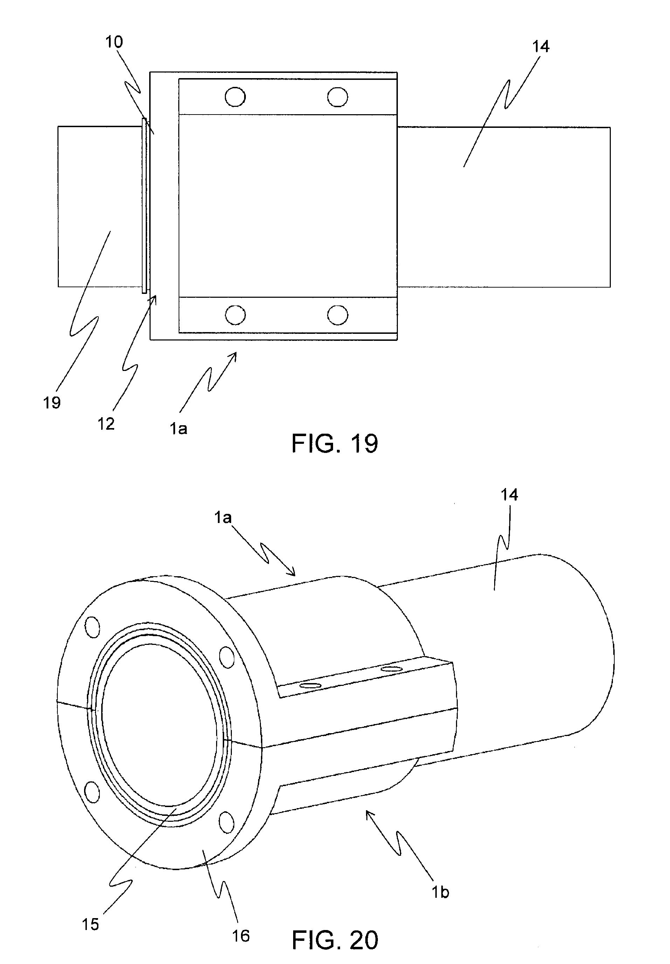

Once tightening has been performed, a front portion (19) of the pipe (14) is in cantilever in the front faces (16) of the couplings (1a, 1b). By means of the notch (12) of the lower perimeter rim or projection (10) located on the front face (16) it is possible to operate a cutting tool such as a saw to cut flush the front face (16) of the cantilever part (19) of the pipe (14). As shown in figure 20, a straight and smooth flush cut (15) of front faces (16) of the couplings (1a, 1b) is achieved.

These same operations should be performed for the second pipe to be joined.

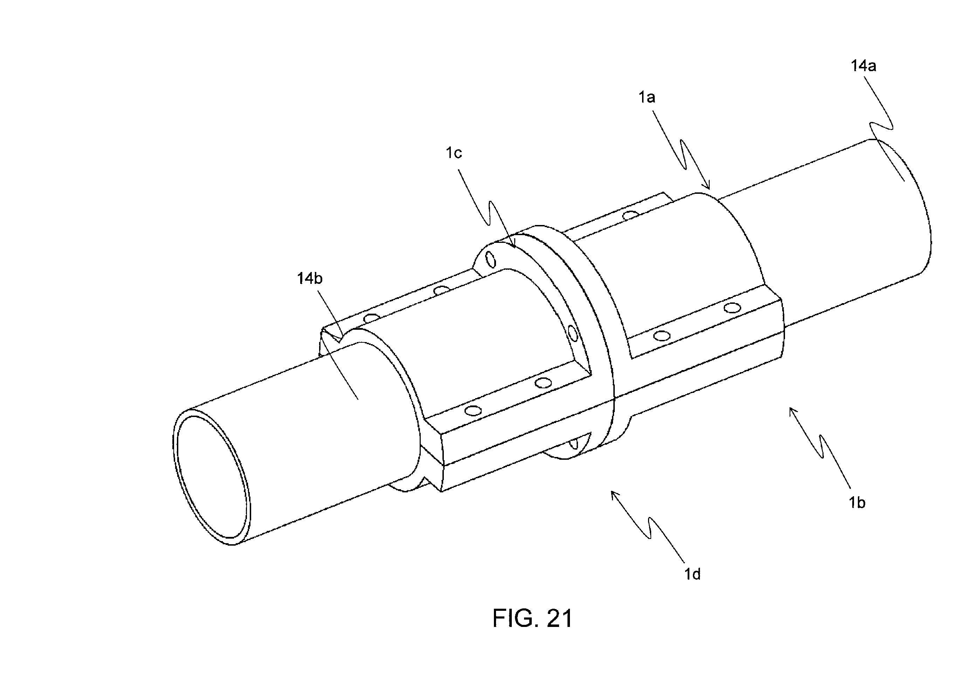

Thus, figure 21 shows a first coupling element (1a) joined to a second coupling element (1b) located in one end of a first pipe (14a). Similarly, a third coupling element (1c) joined to a fourth coupling element (1d) are located in one end of a second pipe (14b).

Between coupling elements (1a, 1b) and coupling elements (1 c, 1d) there is an O-ring (13) housed in the semicircular grooves (9), so as to obtain full sealing between the pipes (14a, 14b) when both coupling assemblies are joined through joining means (not shown) such as bolts and nuts that are located in the plurality of front holes (8).

The invention easily succeeds in making HDPE pipes to achieve a circular shape by means of these four coupling elements, since it is only necessary to tight the bolts and nuts in the same coupling against which the pipes are installed. Nevertheless, another part of this invention is also the fact of providing a notch as a cutting guide to remove the excess of the pipe in the same coupling elements so as to obtain a straight and smooth cut.

Succeeding in making the pipes circular having straight and smooth cut of the excess of the pipe by means of the cutting guide are key factors in order to obtain a precise and perfect fit between the pipes without having separations or singularities (connectors, valves or any other element installed in the pipe) in them.

The polyamide plastic material allows total sealing between the coupling elements and the pipe, as well as between the parts on both sides of the coupling when in contact with water or humid environments. This is due to the special characteristic of the polyamide plastic that absorbs humidity and increases its dimensions both to the outside and inside of the coupling elements.

## Claims

1. A coupling element (1) that allows forming an easy-to-install coupling with precise and perfect fit between the pipes, comprising a body and a cavity in said body to house a pipe, WHEREIN:
said semi-tubular body (2) is provided with a first flange (3) in its first lower edge and having a second flange (4) in its second lower edge;
wherein a first plurality of holes (5) is located in the first flange (3) and a second plurality of second holes (6) is located in the second flange (4);
wherein the upper edge of the front face (16) of said body (2) has a semicircular flange (7) where a plurality of front holes (8) is located;
wherein said front face (16) of said body (2) includes a semicircular groove (9) located concentrically to the semicircular cavity (17) of the coupling element (1);
wherein the lower edge of said front face (16) includes a lower perimeter rim or projection (10) provided with a notch (12); and
wherein the lower face of the body (2), in said semicircular cavity (17) has a plurality of ribs (11) designed to sink or indent into the outer surface of the pipe (14) so as to ensure proper sealing.

2. The coupling element (1) of claim 1, WHEREIN the ribs (11) have a triangular section shaped as a tooth.

3. The coupling element (1) of claim 1, WHEREIN the ribs (11) have a rectangular section.

4. The coupling element (1) of claim 1, WHEREIN the ribs (11) have a rectangular section with a convex curved outer edge.

5. The coupling element (1) of any of the claims 1 to 4, WHEREIN the rib (12) of the lower perimeter rim or projection (10) has a triangular section.

6. The coupling element (1) according to any of the claims 1 to 4, WHEREIN the rib (12) of the lower perimeter rim or projection (10) has a rectangular section.

7. The coupling element (1) according to any of the claims 1 to 6, WHEREIN said semicircular groove (9) concentrically located with respect to said cavity (17) houses an O-ring (13).

8. The coupling element (1) according to any of the claims 1 to 7, WHEREIN said coupling element is made of polyamide plastic material.

9. A method of assembly for coupling elements (1) that allow forming an easy-to-install coupling with precise and perfect fit between the pipes and comprising a body and a cavity in said body to house a pipe, WHEREIN it comprises the following steps:
(a) joining two coupling elements (1) by means of a first coupling element (1a) with a second inverted homologous coupling element (1b), thus creating with each coupling element (1a, 1b); a circular cavity (18) having semicircular cavities (17)
(b) placing a first pipe (14a) in said cavity (18) exceeding the front surfaces (16) of said coupling elements (1a, 1b) and leaving a front portion (19) of said first pipe (14a) as in cantilever form.
(c) joining the coupling elements (1a, 1b) through joining means;
(d) tightening said joining means until a plurality of ribs (11) located on the lower face of each coupling element (1a, 1b) sink or indents into the outer surface of said first pipe (14a); and
(e) cutting the cantilever portion (19) of the first pipe (14a) using a notch (12) of the lower perimeter rim or projection (10) located on the front face (16) as a cutting guide.

10. The method to assemble coupling elements (1) according to claim 9, WHEREIN it comprises repeating steps (a) to (e) in a third coupling element (1c) and in a fourth coupling element (1d) and placing them in one end of a second pipe (14b).

11. The method to assemble coupling elements (1) according to claims 9 and 10, WHEREIN it also comprises the steps of:
(f) housing an O-ring (13) between the first and second coupling element (1a, 1b) and the third and fourth coupling element (1c, 1d) using a semicircular groove (9) located in the front face of said coupling elements (1a, 1b, 1c, 1d); and
(g) joining said coupling elements (1a, 1b, 1c, 1d) using joining means by housing them in a plurality of front holes (8) located in a semicircular flange (7) located in the front face (16) of said coupling elements (1a, 1b, 1c, 1d) so as to achieve total sealing between said first and seconds pipes (14a, 14b).

12. The method to assemble the coupling elements (1) according to any of claims 9 to 11, WHEREIN bolts and nuts are used in the steps (c) and (g).
